## Europäisches Patentamt
## European Patent Office
## Office européen des brevets

(19)

(11) Numéro de publication: **0 117 374**
**B1**

(12) # FASCICULE DE BREVET EUROPÉEN

(45) Date de publication du fascicule du brevet: **15.10.86**

(51) Int. Cl.⁴: **H 04 N 11/16**

(21) Numéro de dépôt: **83402421.8**

(22) Date de dépôt: **14.12.83**

(54) **Circuit de compensation automatique de ligne à retard dans un téléviseur PAL.**

(30) Priorité: **23.12.82 FR 8221626**

(43) Date de publication de la demande:
**05.09.84 Bulletin 84/36**

(45) Mention de la délivrance du brevet:
**15.10.86 Bulletin 86/42**

(84) Etats contractants désignés:
**DE FR GB IT NL**

(56) Documents cité:
**DE-B-1 252 731**
**DE-B-1 288 123**
**GB-A-2 059 714**

(73) Titulaire: **THOMSON- CSF, 173, Boulevard Haussmann, F-75379 Paris Cedex 08 (FR)**

(72) Inventeur: **Douziech, Patrick, c/o THOMSON- CSF 173 bld Haussmann, F-75379 Paris Cédex 08 (FR)**
Inventeur: **Imbert, Michel, c/o THOMSON- CSF 173 bld Haussmann, F-75379 Paris Cédex 08 (FR)**

(74) Mandataire: **Ruellan- Lemonnier, Brigitte, THOMSON- CSF SCPI 19, avenue de Messine, F-75008 Paris (FR)**

## Description

La présente invention concerne un circuit de compensation automatique de la ligne à retard faisant partie du circuit de décodage de chrominance dans un téléviseur couleur adapté au système PAL ou autres systèmes de même type.

Dans le système le plus courant de transmission de télévision du type PAL, parfois appelé système PAL-DL, une ligne à retard est utilisée dans le circuit de décodage de chrominance pour permettre de combiner les signaux de chrominance contenus dans des lignes successives du signal vidéo composite de télévision. Cette ligne à retard doit permettre de fournir un retard précis, de la durée d'une ligne de télévision (par exemple 64 microsecondes) et ne doit pas atténuer le signal ou bien l'atténuer d'une quantité connue, pour que les signaux retardé et non-retardé de deux lignes successives puissent être efficacement combinés. Ainsi, on associe classiquement à une ligne à retard d'un décodeur PAL, un réglage de phase (de retard) et d'amplitude. Ces moyens de réglage sont généralement constitués d'une inductance réglable et d'une résistance réglable, ces réglages étant effectués à la fabrication.

Le fait de prévoir un réglage dans un téléviseur constitue un élément de coût non négligeable, d'une part, en raison du temps de main d'oeuvre exigé, d'autre part, parce que les composants réglables doivent être des composants de haute fiabilité pour que le réglage se maintienne une fois effectué.

Un objet principal de la présente invention est de prévoir un circuit de compensation automatique de la ligne à retard permettant d'éviter tout réglage à la fabrication, ce circuit de compensation automatique étant simplement intégrable.

Pour atteindre cet objet, la présente invention prévoit un circuit de compensation automatique de la ligne à retard d'un décodeur de chrominance dans un téléviseur couleur de type PAL comprenant: un amplificateur à gain variable suivi d'un déphaseur variable; un circuit de commande de gain connecté à l'amplificateur et recevant la sortie du déphaseur, ce circuit élaborant un signal de commande pour l'amplificateur pendant la durée de la salve du signal vidéo composite; et un comparateur de phase comparant, pendant la durée de la salve, le signal d'entrée vers la ligne à retard et le signal de sortie du déphaseur variable et commandant le déphaseur variable pour amener lesdits signaux d'entrée et de sortie en quadrature.

Un avantage de l'agencement général du circuit de compensation automatique de ligne à retard décrit précédemment est qu'il permet de prévoir un déphaseur variable particulièrement simple puisque ce déphaseur peut introduire des variations d'amplitude, ces variations d'amplitude étant automatiquement rattrapées par le circuit de commande de gain. A titre d'exemple, le déphaseur variable peut comprendre en parallèle deux reseaux produisant respectivement une avance et un retard de phase pour la fréquence de salve suivis d'amplificateurs à gain variable dont les sorties sont connectées aux entrées d'un sommateur.

Ces objets, caractéristiques et avantages ainsi que d'autres de la présente invention seront exposés plus en détail dans la description suivante d'un mode de réalisation particulier faite en relation avec les figures jointes parmi lesquelles:

- la figure 1 représente de façon générale et sous forme de blocs un circuit de décodage de chrominance dans un televiseur de type PAL, incorporant le circuit de compensation automatique selon la présente invention;

- la figure 2 représente un déphaseur variable pouvant être incorporé dans le circuit selon l'invention.

Rappelons d'abord la structure des signaux de télévision dans le système PAL. L'image de télévision est divisée en deux trames entrelacées successives. Au début de chaque trame, est envoyée une succession de signaux de synchronisation de trame, puis le signal est envoyé ligne par ligne. Pour chaque ligne, le signal contient l'information de luminance et l'information de chrominance. L'information de chrominance est contenue dans la modulation en amplitude et en phase d'une sous-porteuse de chrominance, couramment à la frequence 4,43 MHz dans le système PAL. Les sous-porteuses de chrominance relatives à deux lignes successives présentent entre elles une certaine relation de phase (en alternance d'une ligne à l'autre) et pour retrouver l'information de chrominance il convient de combiner les signaux contenus dans deux lignes successives. Au début de chaque ligne du signal vidéo composite, on trouve un créneau de synchronisation suivi d'une "salve" de quelques périodes du signal de la sous-porteuse de chrominance, les salves successives présentant entre elles un déphasage de 90°.

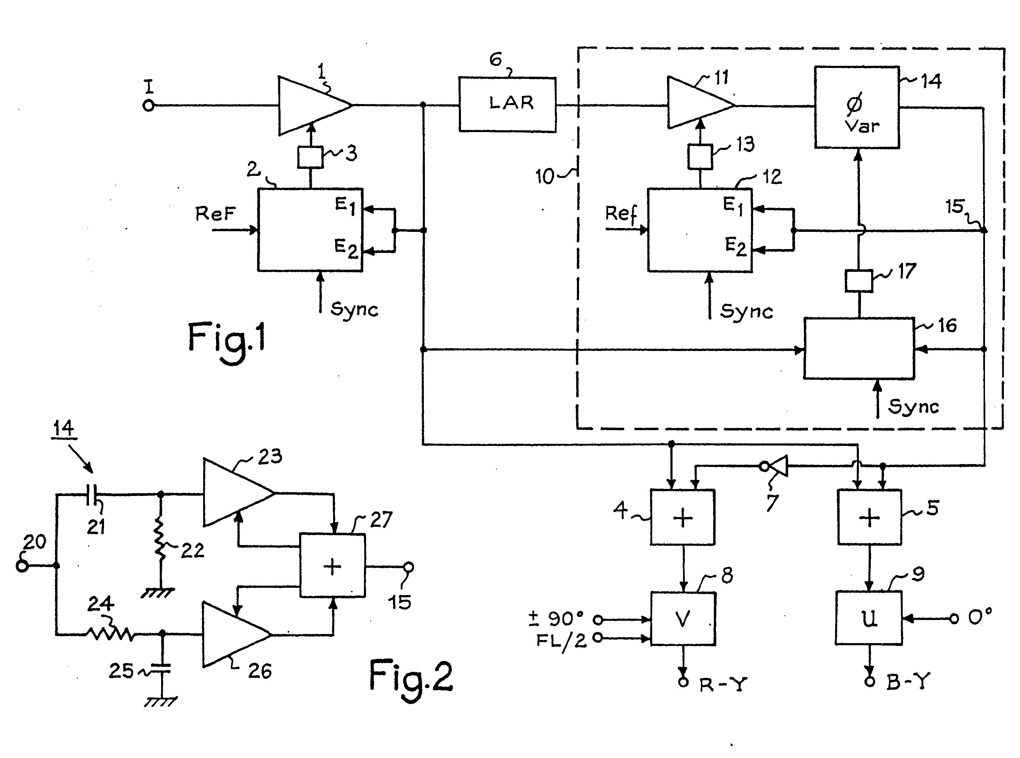

Le circuit illustré en figure 1, à l'exception de la partie encadrée par des pointillés qui contient les blocs caractéristiques de l'invention, va d'abord être utilisé pour rappeler le fonctionnement d'un circuit de décodage de chrominance PAL classique. Le signal vidéo composite arrive à l'entrée 1, apres être passé par un filtre éliminant les fréquences trop éloignées de celle de la sous-porteuse de chrominance. Ce signal est ensuite transmis dans un circuit de réglage automatique de gain comprenant un amplificateur à gain variable 1 associé à un circuit de commande de gain 2 fonctionnant pendant la durée d'un signal de synchronisation Sync correspondant à la durée de présence de la salve et commandant l'amplificateur variable 1 par l'intermédiaire d'un moyen de filtrage et de maintien 3. Le circuit de commande de gain 2 reçoit la sortie de l'amplificateur variable sur ses premieres entrées E1 et E2, en fait le produit, et compare ce produit a un signal de reference Ref, pendant la durée du

2

signal de salve comme cela a été indiqué précédemment. La sortie de l'amplificateur variable 1 est adressée à une première entrée d'additionneurs 4 et 5 et à l'entrée d'une ligne à retard 6 assurant aux signaux à des fréquences voisines de celle de la sous-porteuse de chrominance un retard de la durée d'une ligne. La sortie de la ligne à retard 6 est transmise aux deuxièmes entrées des additionneurs 4 et 5, un inverseur 7 étant interposé avant l'entrée vers l'additionneur 4. On obtient donc à la sortie de l'additionneur 4 la différence entre les signaux direct et retardé et à la sortie de l'additionneur 5 leur somme. Les sorties des additionneurs 4 et 5 sont démodulées dans des démodulateurs synchrones 8 et 9 qui fournissent en sortie les signaux de chrominance R-Y et B-Y. Le démodulateur synchrone 9 reçoit un signal généré par un oscillateur local asservi à 4,43 MHz (non représenté) avec une certaine phase qu'on appellera phase 0° et le démodulateur 8 reçoit ce même signal mais déphasé de + ou - 90° selon les lignes, c'est pourquoi on a figuré à l'entrée de ce démodulateur 8 le signal + ou - 90° et un signal PL/2 correspondant à la demi-fréquence ligne.

Comme on l'a indiqué précédemment, dans l'art antérieur, la sortie de la ligne à retard 6 est envoyée aux entrées des additionneurs 4 et 5 par l'intermédiaire d'un circuit d'ajustement de phase et d'amplitude pour, d'une part, assurer un retard convenable, d'autre part, présenter des signaux de même amplitude que ceux apparaissant à la sortie de l'amplificateur variable 1. Ces reglages sont classiquement effectués sur des composants ajustables au moment de la fabrication du téléviseur.

Le circuit de compensation automatique selon l'invention est inclus dans le bloc en pointillés 10. Ce circuit comprend d'abord un ensemble de commande automatique de gain (11, 12, 15) similaire à l'ensemble existant sur la ligne directe (1, 2, 3), cet ensemble de commande automatique de gain comprend un amplificateur à gain variable 11, un circuit de commande de gain 12 et un moyen de filtrage et de maintien 13. Le circuit 12 fonctionne comme le circuit 2 et reçoit le même signal de référence Ref et le signal de synchronisation Sync. Mais, un déphaseur variable 14 est inclus dans la boucle d'asservissement et le signal d'asservissement est pris à la sortie 15 du déphaseur variable 14. C'est donc à cette sortie 15 que l'on obtient un signal retardé avec un niveau de gain constant égal au niveau de gain dans la voie directe à la sortie de l'amplificateur variable 1 et l'on a ainsi compensé dans la voie retardée les éventuelles atténuations dues à la ligne à retard de même que les éventuelles atténuations variables introduites par le déphaseur variable 14. Le déphaseur variable 14 est commandé par un comparateur de phase 16 comparant, pendant la durée de la salve, c'est-à-dire pendant la durée du signal Sync, les signaux sur la voie directe et sur la voie retardée et fournissant un signal d'asservissement au déphaseur variable 14 par l'intermédiaire d'un moyen de filtrage et de maintien 17 pour que les signaux de salve sur les voies directe et retardée soient en quadrature.

On ne décrira pas plus en détail ici les divers blocs illustrés en figure 1 car ils font tous classiquement partie d'un circuit de décodage de chrominance dans un téléviseur PAL. Toutefois, on peut voir en figure 2 un exemple de réalisation du déphaseur variable 14 qui, lui, n'apparaît pas habituellement dans ces circuits de téléviseur. On insistera tout particulièrement sur le fait que ce déphaseur variable peut être particulièrement simple puisqu'il n'est pas nécessaire qu'il présente un gain constant, les variations de gain qu'il introduit étant automatiquement rattrapées par le circuit de commande de gain 12 associé à l'amplificateur variable 11.

La figure 2 représente un exemple de circuit de déphasage variable 14. Ce circuit reçoit à son entrée 20 la sortie de l'amplificateur variable 11 et la dirige sur deux voies en parallèle. La première voie comprend un déphaseur produisant une avance de phase, constitué par exemple d'un condensateur 21 en série et d'une résistance 22 à la masse, suivi d'un amplificateur variable 23. La deuxième voie comprend un circuit déphaseur produisant un retard de phase, constitué par exemple d'une résistance en série 24 et d'un condensateur a la masse 25, suivi d'un amplificateur variable 26. Les amplificateurs variables 23 et 26 reçoivent deux signaux de commande complémentaires en provenance du comparateur de phase 16 de sorte que, autour d'une valeur moyenne, quand le gain de l'amplificateur 23 augmente, celui de l'amplificateur 26 diminue et inversement. On peut donc combiner les signaux en avance et en retard de phase avec un poids variable. Ces signaux sont additionnés dans un sommateur 27 qui fournit à sa sortie 15 un signal de phase variable en fonction des signaux de commande appliqués aux amplificateurs variables 23 et 26.

On notera qu'avec un circuit de déphasage variable tel que celui de la figure 2 on peut obtenir simplement un déphasage de + ou - 45° alors que, normalement, avec les techniques de fabrication classiques, la dispersion de phase d'une ligne a retard est de l'ordre de + ou - 8° seulement. Le déphaseur simple décrit est donc bien adapté à l'application particulière visée.

**Revendications**

1. Circuit de compensation de la ligne à retard d'un décodeur de chrominance dans un téléviseur couleur adapté à un système de type PAL, caractérisé en ce qu'il comprend:
- un amplificateur à gain variable (11) suivi d'un déphaseur variable (14),
- un circuit de commande de gain (12) connecté à l'amplificateur et recevant la sortie (15) du déphaseur, ce circuit élaborant un signal de commande pour l'amplificateur (11) pendant la durée (Sync) de la salve du signal vidéo composite,

- un comparateur de phase (16) comparant, pendant la durée (Sync) de la salve, le signal d'entrée vers la ligne à retard et le signal de sortie du déphaseur variable et commandant le déphaseur variable pour amener ces signaux en quadrature.

2. Circuit selon la revendication 1, caractérisé en ce que le déphaseur variable comprend en parallèle deux réseaux (21-22 et 24-25) produisant respectivement une avance et un retard de phase pour la fréquence de salve, suivis d'amplificateurs à gain variable (23-26) dont les sorties sont connectées aux entrées d'un sommateur (27).

**Patentansprüche**

1. Kompensationsschaltung für die Verzögerungsleitung eines Chrominanzdecoders in einem Farbfernsehempfänger, der für ein PAL-System ausgelegt ist, dadurch gekennzeichnet, daß sie umfaßt:

- einen Verstärker (11) mit variabler Verstärkung, auf den ein variabler Phasenschieber (14) folgt,

- eine Verstärkungssteuerschaltung (12), welche an den Verstärker angeschlossen ist und das Ausgangssignal (15) des Phasenschiebers empfängt, wobei diese Schaltung ein Steuersignal für den Verstärker (11) während der Dauer (Sync) der Salve des zusammengesetzten Videosignals erzeugt,

- einen Phasenkomparator (16), welcher während der Dauer (Sync) der Salve das Eingangssignal an der Verzögerungsleitung mit dem Ausgangssignal des variablen Phasenschiebers vergleicht und den variablen phasenschieber steuert, so daß diese Signale um 90° gegeneinander phasenverschoben sind.

2. Schaltung nach Anspruch 1, dadurch gekennzeichnet, daß der variable Phasenschieber in Parallelschaltung zwei Netzwerke (21-22 und 24-25) umfaßt, die jeweils eine Phasenvoreilung bzw. Phasenverzögerung für die Salvenfrequenz erzeugen, gefolgt von Verstärkern mit variabler Verstärkung (23-26), deren Ausgänge mit den Eingängen eines Summierers (27) verbunden sind.

**Claims**

1. Compensation circuit for the delay line of a chrominance decoder in a color television receiver adapted to a PAL system, characterized in that it comprises:

- a variable gain amplifier (11) followed by a variable phase shifter (14),

- a gain control circuit (12) connected to the amplifier and receiving the output (15) of the phase shifter, said circuit receiving a control signal for the amplifier (11) for the duration (Sync) of the burst of the composite video signal,

- a phase comparator (16) comparing during the duration (sync) of the burst the input signal to the delay line and the output signal of the variable phase shifter and controlling the variable phase shifter to bring these signals into quadrature.

2. Circuit according to claim 1, characterized in that the variable phase shifter comprises in parallel two networks (21-22 and 24-25) generating respectively a phase lead and a phase lag for the burst frequency, followed by variable gain amplifiers (23-26) whose outputs are connected to the inputs of a summer (27).

Fig.1

Fig.2

0117374